# EUROPEAN PATENT APPLICATION

(11) **EP 4 799 848 A1**
(43) Date of publication of application: **02.09.2026**
(21) Application number: 24890236.3
(22) Date of filing: 19.08.2024
(51) Int. Cl.: B60L 1/00, H02J 7/00, H02M 1/00

(54) **VEHICLE**

(30) Priority: 14.11.2023 CN 202323075100 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: YAN, Yu, Ningde, Fujian 352100 (CN); CHEN, Xing, Ningde, Fujian 352100 (CN); HUANG, Xiaojian, Ningde, Fujian 352100 (CN)
(74) Representative: Kraus & Lederer PartGmbB
(86) International application number: PCT/CN2024/113113
(87) International publication number: WO 2025/102874

(57) **Abstract**

The present application provides a vehicle, belonging to the field of battery technologies. The vehicle includes: a traction battery; an electric device; a charging interface, configured to connect to a charging device to enable the vehicle to be powered by the charging device, where the charging interface includes a positive electrode terminal and a negative electrode terminal; and a bypass module, configured to connect or disconnect the charging device from the electric device.

## Description

### CROSS-REFERENCE TO RELATED APPLICATIONS

The present application refers to Chinese Patent Application No. 2023230751004, filed on November 14, 2023, and entitled "VEHICLE", which is incorporated herein by reference in its entirety.

### TECHNICAL FIELD

The present application relates to the field of battery technologies, and in particular, to a vehicle.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technologies are an important factor related to the development of the electric vehicles.

Electric vehicles are equipped with numerous electric devices. During the use of an electric vehicle, a traction battery in a vehicle generally charges the electric devices. When the power of the traction battery is insufficient, the charging device such as a charging pile may be used to charge the traction battery. Charging devices are generally connected to the grid or energy storage devices, capable of providing sufficient electrical energy. However, after being connected to the vehicle, the charging device is generally used only to charge the traction battery in the vehicle and cannot flexibly utilize the electrical energy of the charging device.

### SUMMARY

The present application is intended to solve at least one of the technical problems in the background. To this end, an object of the present application is to provide a vehicle to alleviate, mitigate, or eliminate the problems in the related art.

According to a first aspect of the present application, an embodiment provides a vehicle, including: a traction battery; an electric device; a charging interface, configured to connect to a charging device to enable the vehicle to be powered by the charging device, where the charging interface includes a positive electrode terminal and a negative electrode terminal; and a bypass module, configured to connect or disconnect the charging device from the electric device.

In the technical solution of the embodiments of the present application, the configuration of the bypass module can connect or disconnect an electrical connection between the charging device and the electric device, thereby disconnecting or connecting an electrical connection between the charging device and the traction battery. This allows the charging device to charge the electric device before charging the traction battery, achieving an expanded application of the charging device.

In some embodiments, the bypass module includes at least one of a switch or a wire, thereby allowing for flexible configuration of the bypass module.

In some embodiments, the bypass module includes: a first switch, connected between the positive electrode terminal and a positive line of the electric device; and a second switch, connected between the negative electrode terminal and a negative line of the electric device. The configuration of the first switch and the second switch can control an electrical connection/disconnection between the electric device and the charging device, thereby making operation more flexible.

In some embodiments, the bypass module includes: a first switch, connected between the positive electrode terminal and a positive line of the electric device; and a second wire, connected between the negative electrode terminal and the negative line of the electric device. The configuration of the first switch and the second wire can control an electrical connection/disconnection between the electric device and the charging device, reducing the number of switching devices in the vehicle.

In some embodiments, the bypass module includes: a first wire, connected between the positive electrode terminal and a positive line of the electric device; and a second switch, connected between the negative electrode terminal and the negative line of the electric device. The configuration of the first wire and the second switch can control an electrical connection/disconnection between the electric device and the charging device, reducing the number of switching devices in the vehicle.

In some embodiments, the bypass module includes: a first switch, connected between the positive electrode terminal and a positive line of the electric device. The configuration of the first switch can control an electrical connection/disconnection between the electric device and the charging device, reducing the number of electrical components in the vehicle.

In some embodiments, the bypass module includes: a second switch, connected between the negative electrode terminal and the negative line of the electric device. The configuration of the second switch can control an electrical connection/disconnection between the electric device and the charging device, reducing the number of electrical components in the vehicle.

In some embodiments, the bypass module includes: a first wire, connected between the positive electrode terminal and a positive line of the electric device. The configuration of the first wire can control an electrical connection/disconnection between the electric device and the charging device, reducing the number of switching devices in the vehicle.

In some embodiments, the bypass module includes: a second wire, connected between the negative electrode terminal and the negative line of the electric device. The configuration of the second wire can control an electrical connection/disconnection between the electric device and the charging device, reducing the number of switching devices in the vehicle.

In some embodiments, the vehicle further includes: a third switch, connected between a positive electrode of the traction battery and a positive line of the electric device; and a fourth switch, connected between a negative electrode of the traction battery and the negative line of the electric device. The configuration of the third switch and the fourth switch can reduce the number of electrical components in the bypass module.

In some embodiments, the vehicle further includes: an electric energy module, configured to apply a current to the traction battery to heat the traction battery; a fifth switch, connected between the positive electrode of the traction battery and a positive line of the electric energy module; and a sixth switch, connected between the negative electrode of the traction battery and a negative line of the electric energy module. The electric energy module can be used to apply a current to the traction battery, thereby addressing the issue that the traction battery cannot be charged due to excessively low temperature.

In some embodiments, the vehicle further includes: a seventh switch, connected between the positive electrode terminal and the positive electrode of the traction battery; and an eighth switch, connected between the negative electrode terminal and the negative electrode of the traction battery. The configuration of the seventh switch and the eighth switch can control an electrical connection/disconnection between the traction battery and the charging device, thereby improving safety during vehicle charging and making operation more convenient. Additionally, during the heating process of the traction battery, disconnecting the electrical connection between the traction battery and the charging device and restoring the electrical connection between the traction battery and the charging device after heating is completed enable charging of the traction battery after heating of the traction battery is completed without disconnecting a physical connection between the charging device and a charging interface of the vehicle, thereby significantly reducing the complexity of the entire charging process.

In some embodiments, the vehicle further includes: an electric energy module, configured to apply a current to the traction battery to heat the traction battery; a fifth switch, connected between the positive electrode of the traction battery and the positive line of the electric energy module, and connected in series with the third switch between the positive electrode of the traction battery and a positive line of the electric device; and a sixth switch, connected between the negative electrode of the traction battery and the negative line of the electric energy module, and connected in series with the fourth switch between the negative electrode of the traction battery and the negative line of the electric device. The electric energy module can be used to apply a current to the traction battery, thereby addressing the issue that the traction battery cannot be charged due to excessively low temperature.

In some embodiments, the vehicle further includes: a seventh switch, connected in series with the fifth switch between the positive electrode terminal and the positive electrode of the traction battery; and an eighth switch, connected in series with the sixth switch between the negative electrode terminal and the negative electrode of the traction battery. The configuration of the seventh switch and the eighth switch can control an electrical connection/disconnection between the traction battery and the charging device, thereby improving safety during vehicle charging and making operation more convenient. Additionally, during the heating process of the traction battery, disconnecting the electrical connection between the traction battery and the charging device and restoring the electrical connection between the traction battery and the charging device after heating is completed enable charging of the traction battery after heating of the traction battery is completed without disconnecting a physical connection between the charging device and a charging interface of the vehicle, thereby significantly reducing the complexity of the entire charging process.

In some embodiments, the vehicle further includes: a first precharge branch, connected in parallel with either the fifth switch or the sixth switch. The configuration of the first precharge branch can effectively prolong the life of the traction battery.

In some embodiments, the first precharge branch includes a first precharge resistor and a ninth switch connected in series. The configuration of the first precharge branch can effectively prolong the life of the traction battery.

In some embodiments, the vehicle further includes: a tenth switch, connected to the electric device; and a second precharge branch, connected in parallel with the tenth switch. The configuration of the second precharge branch can effectively prolong the life of the electric device.

In some embodiments, the second precharge branch includes a second precharge resistor and an eleventh switch connected in series. The configuration of the second precharge branch can effectively prolong the life of the electric device.

In some embodiments, the electric device includes at least one of the following: an air conditioning compressor, a power converter, a heat pump, and a positive temperature coefficient thermistor. The charging device can supply power to the electric devices in the vehicle that require power. In some cases, the electric device can also assist in heating the traction battery, thereby shortening heating time.

In some embodiments, the vehicle further includes: a twelfth switch, connected between the positive electrode of the traction battery and a positive line of the electric device; and a thirteenth switch, connected between the negative electrode of the traction battery and the negative line of the electric device. The configuration of the twelfth switch and the thirteenth switch can reduce the number of electrical components in the bypass module.

In some embodiments, the vehicle further includes: an electric energy module, configured to apply a current to the traction battery to heat the traction battery; a fourteenth switch, connected between the positive electrode of the traction battery and the positive line of the electric energy module, and connected in series with the twelfth switch between the positive electrode of the traction battery and a positive line of the electric device; and a fifteenth switch, connected between the negative electrode terminal and the negative electrode of the traction battery, and connected between the negative electrode terminal and the negative line of the electric energy module. The electric energy module can be used to apply a current to the traction battery, thereby addressing the issue that the traction battery cannot be charged due to excessively low temperature.

In some embodiments, the vehicle further includes: a sixteenth switch or a third wire, connected between the positive electrode terminal and t positive line of the electric energy module, and connected in series with the first switch between a positive line of the electric device and the positive line of the electric energy module. This can reduce the number of electrical components in the bypass module.

In some embodiments, the vehicle further includes: a twelfth switch, connected between the positive electrode of the traction battery and a positive line of the electric device; and a thirteenth switch, connected between the negative electrode of the traction battery and the negative line of the electric device. The configuration of the twelfth switch and the thirteenth switch can reduce the number of electrical components in the bypass module.

In some embodiments, the vehicle further includes: an electric energy module, configured to apply a current to the traction battery to heat the traction battery; a fourteenth switch, connected between the positive electrode of the traction battery and the positive line of the electric energy module, and connected in series with the twelfth switch between the positive electrode of the traction battery and a positive line of the electric device; and a fifteenth switch, connected between the negative electrode terminal and the negative electrode of the traction battery, and connected between the negative electrode terminal and the negative line of the electric energy module. The electric energy module can be used to apply a current to the traction battery, thereby addressing the issue that the traction battery cannot be charged due to excessively low temperature.

In some embodiments, the vehicle further includes: a sixteenth switch, connected between the positive electrode terminal and the positive line of the electric energy module, and connected in series with the second wire between a positive line of the electric device and the positive line of the electric energy module. This can reduce the number of electrical components in the bypass module.

In some embodiments, the vehicle further includes: a third precharge branch, connected in parallel with either the fourteenth switch or the fifteenth switch. The configuration of the third precharge branch can effectively prolong the life of the traction battery.

In some embodiments, the third precharge branch includes a third precharge resistor and a seventeenth switch connected in series. The configuration of the third precharge branch can effectively prolong the life of the traction battery.

In some embodiments, the electric device includes a heating film. In some cases, the electric device can also assist in heating the traction battery, thereby shortening heating time.

In some embodiments, the electric energy module includes at least one of an energy storage module or a motor control module. The electric energy module can be selected based on the usage environment, improving adaptability to different usage scenarios for different vehicles.

The foregoing descriptions are merely an overview of the technical solution of the present application. For a better understanding of the technical means in the present application, such that they can be implemented according to the content of the specification, and to make the above and other objectives, features and advantages of the present application more obvious and easier to understand, the following describes specific embodiments of the present application.

### BRIEF DESCRIPTION OF DRAWINGS

In the accompanying drawings, unless otherwise specified, same reference signs throughout a plurality of accompanying drawings indicate the same or similar components or elements. These accompanying drawings may not necessarily be drawn to scale. It should be understood that these accompanying drawings illustrate only some embodiments disclosed in the present application and should not be construed as limitations on the scope of the present application.
FIG. 1 is an exemplary structural block diagram of a vehicle according to some embodiments of the present application;
FIG. 2 is an exemplary schematic diagram of a vehicle according to some embodiments of the present application;
FIG. 3 is an exemplary schematic diagram of a vehicle according to some embodiments of the present application;
FIG. 4 is an exemplary schematic diagram of a vehicle according to some embodiments of the present application;
FIG. 5 is an exemplary schematic diagram of a vehicle according to some embodiments of the present application;
FIG. 6 is an exemplary schematic diagram of a vehicle according to some embodiments of the present application;
FIG. 7 is an exemplary schematic diagram of a vehicle according to some embodiments of the present application;
FIG. 8 is an exemplary schematic diagram of a vehicle according to some embodiments of the present application;
FIG. 9 is an exemplary schematic diagram of a vehicle according to some embodiments of the present application;
FIG. 10 is an exemplary schematic diagram of a vehicle according to some embodiments of the present application;
FIG. 11 is an exemplary schematic diagram of a vehicle according to some embodiments of the present application;
FIG. 12 is an exemplary schematic diagram of a vehicle according to some embodiments of the present application;
FIG. 13 is an exemplary schematic diagram of a vehicle according to some embodiments of the present application;
FIG. 14 is an exemplary schematic diagram of a vehicle according to some embodiments of the present application;
FIG. 15 is an exemplary schematic diagram of a vehicle according to some embodiments of the present application;
FIG. 16 is an exemplary schematic diagram of a vehicle according to some embodiments of the present application;
FIG. 17 is an exemplary schematic diagram of a vehicle according to some embodiments of the present application;
FIG. 18 is an exemplary schematic diagram of a vehicle according to some embodiments of the present application;
FIG. 19 is an exemplary schematic diagram of a vehicle according to some embodiments of the present application;
FIG. 20 is an exemplary schematic diagram of a vehicle according to some embodiments of the present application; and
FIG. 21 is an exemplary schematic diagram of a vehicle according to some embodiments of the present application.

### Description of reference signs:

100. vehicle;
110. traction battery; 120. electric device; 130. charging interface; 140. bypass module;
150. charging device; 160. electric energy module;
K12. first switch; K13. second switch; b1. first wire; b2. second wire; b3. third wire;
K8. third switch; K9. fourth switch; K3. fifth switch; K4. sixth switch; K5. seventh switch;
K6. eighth switch; K7. ninth switch; K11. tenth switch; K10. eleventh switch; K8'. twelfth switch;
K9'. thirteenth switch; K3'. fourteenth switch; K4'. fifteenth switch; K5'. sixteenth switch;
K7'. seventeenth switch; R1. first precharge resistor; R2. second precharge resistor; and R1'. third precharge resistor.

### DESCRIPTION OF EMBODIMENTS

The following describes in detail some embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "multiple" means at least two unless otherwise specifically defined.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of the present application, the term "multiple" means more than two (inclusive). Similarly, "multiple groups" means more than two (inclusive) groups, and "multiple pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of this the present application.

In the description of the embodiments of the present application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

Currently, from a perspective of the market development, traction batteries have been increasingly widely used. Traction batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles military equipment, and aerospace. With the continuous expansion of application fields of traction batteries, market demands for traction batteries are also expanding.

Electric vehicles are equipped with numerous electric devices. During the use of an electric vehicle, a traction battery in a vehicle generally charges the electric devices. When the power of the traction battery is insufficient, a charging device such as a charging pile may be used to charge the traction battery. However, after being connected to the vehicle, the charging device is generally used only to charge the traction battery in the electric vehicle and does not charge the electric devices in the electric vehicle. This limits the combined application scenarios of the vehicle and the charging device, making it impossible to flexibly utilize the electrical energy of the charging device.

Therefore, there is a need for a vehicle that enables the charging device to charge the electric devices in the vehicle before charging the traction battery of the vehicle, thereby expanding the combined application scenarios of the vehicle and the charging device.

According to the embodiments disclosed in the present application, the vehicle enables the charging device to charge the electric devices in the vehicle before charging.

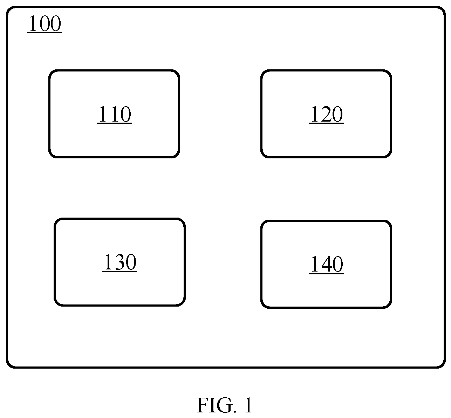

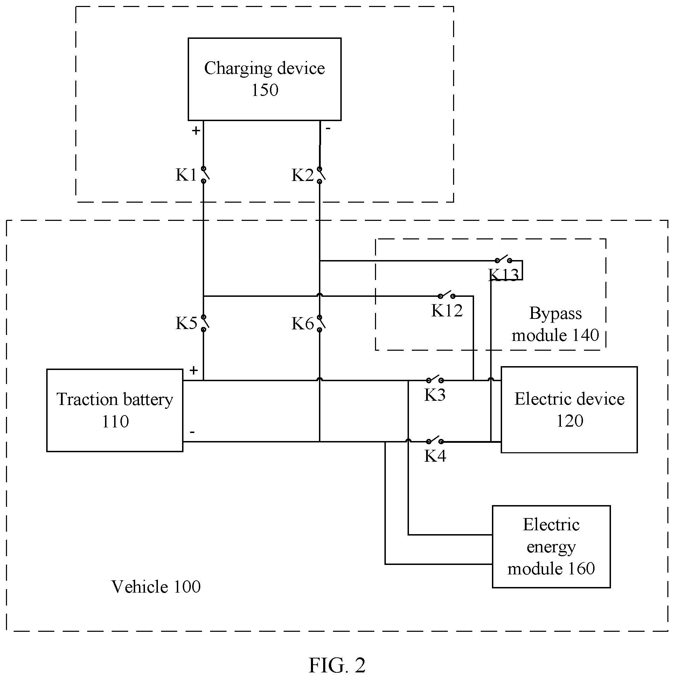

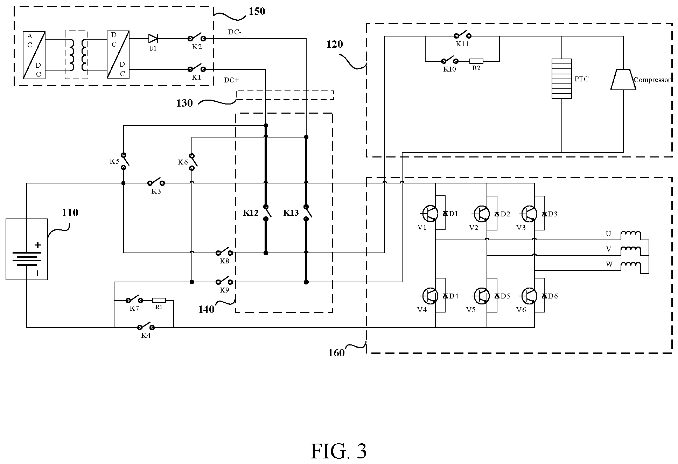

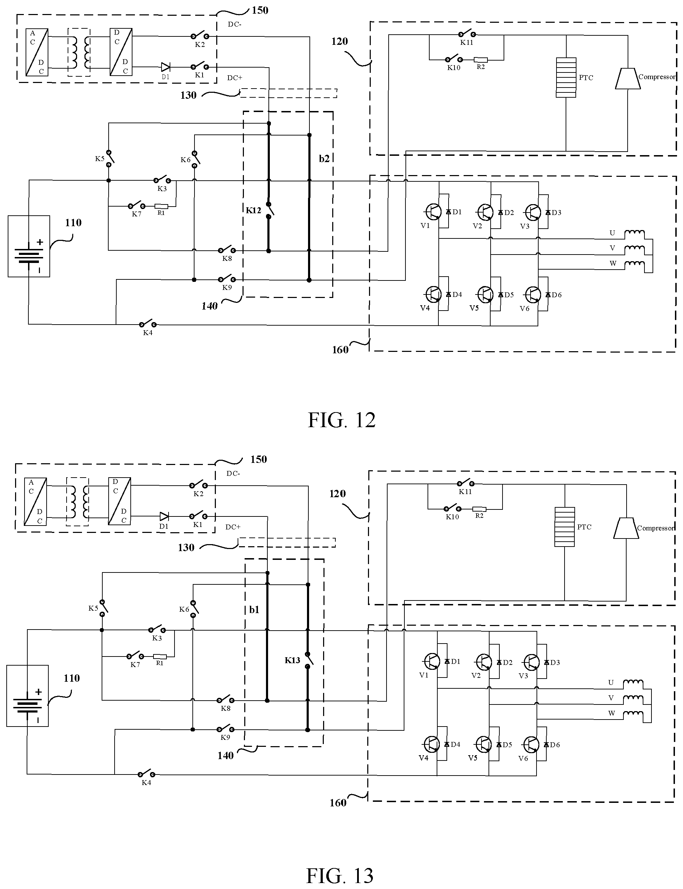

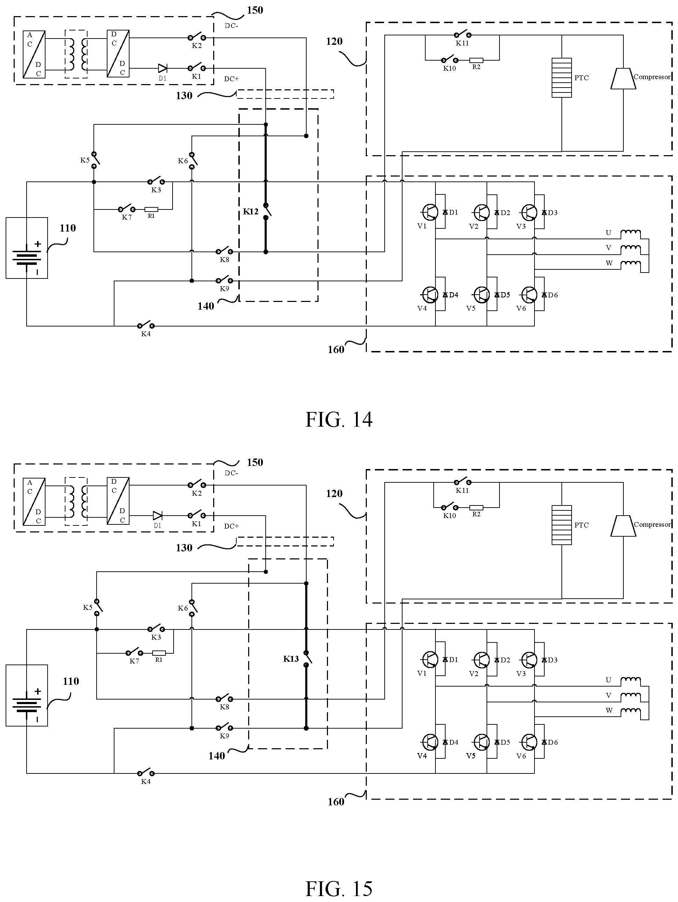

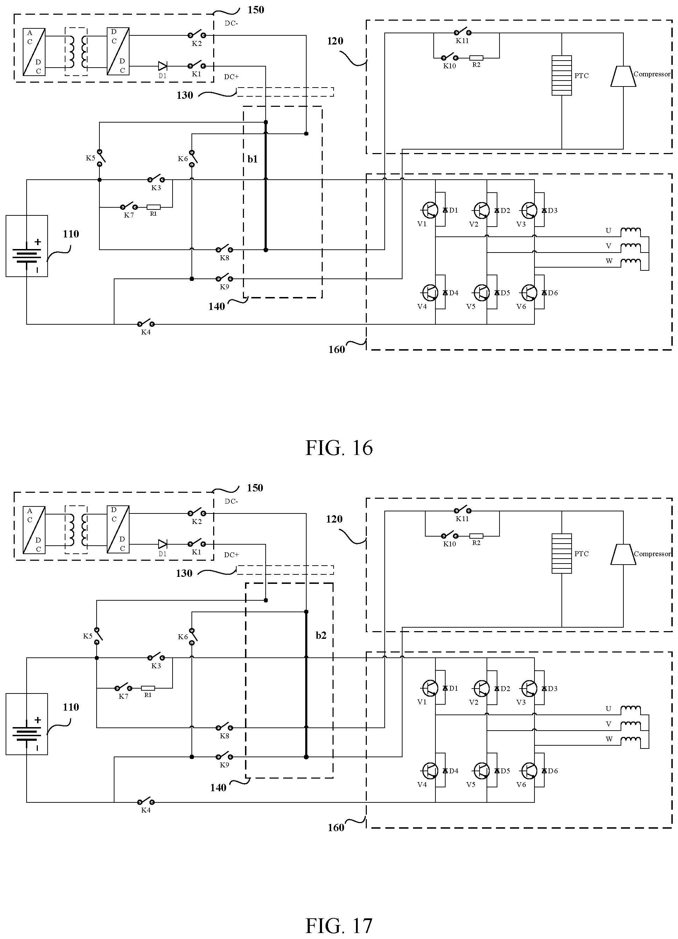

FIG. 1 is an exemplary structural block diagram of a vehicle according to some embodiments of the present application. FIG. 2 is an exemplary schematic diagram of a vehicle according to some embodiments of the present application. FIG. 3 to FIG. 21 are exemplary schematic diagrams of a vehicle according to some embodiments of the present application. For ease of explanation, descriptions will be made in conjunction with one or more of FIG. 1 to FIG. 21.

Referring to FIG. 1, an embodiment of the present application provides a vehicle 100, including: a traction battery 110; an electric device 120; a charging interface 130, configured to connect to a charging device 150 to enable the vehicle 100 to be powered by the charging device 150, where the charging interface 130 includes a positive electrode terminal and a negative electrode terminal; and a bypass module 140, configured to connect or disconnect the charging device 150 from the electric device 120.

In this specification, the term "charging device" may include an off-board conductive charger (which may be referred to as an off-board charger or charger). The charging device 150 may be used to supply power to the traction battery 110 and/or the electric device 120. In the related art, after the vehicle 100 is connected to the charging device 150 through the charging interface 130, the traction battery 110 of the vehicle 100 may be electrically connected to the charging device 150, at which point the traction battery 110 may be used as a load for the charging device 150.

In this specification, the term "bypass module" refers to an apparatus capable of controlling the connection or disconnection of the electrical connection between the electric device 120 and the charging device 150. In some embodiments, when the bypass module 140 is conductive, the electric device 120 may be electrically connected to the charging device 150 through the charging interface 130, at which point the electric device 120 may be used as a load for the charging device 150.

The configuration of the bypass module 140 in the vehicle can connect or disconnect the electric device 120 in the vehicle 100 from the charging device 150. Depending on usage requirements, the charging device 150 can charge the electric device 120; when there is no need for the charging device 150 to charge the electric device 120, an electrical connection between the charging device 150 and the electric device 120 can be disconnected. This allows the charging device 150 to charge the electric device 120 before charging the traction battery, thereby expanding the application scenarios of the vehicle 100 and the charging device 150, enabling flexible utilization of the electrical energy of the charging device 150.

In certain application scenarios, this further provides additional benefits. For example, when the state of the traction battery 110 does not allow charging (for example, excessively low temperature), additional operations (for example, electrical heating) may be required to enable the traction battery 110 to meet charging conditions. These additional operations may cause fluctuations in current or voltage in a charging circuit, thereby damaging the charging device 150 or even the grid. The charging device 150 is electrically connected to the electric device 120 (and potentially, an electrical connection between the charging device 150 and the traction battery 110 is disconnected), these additional operations (for example, electrical heating) can be completed while maintaining the physical connection between the vehicle 100 and the charging device 150 without causing damage to the charging device 150.

According to some embodiments of the present application, the bypass module 140 may include at least one of a switch or a wire.

In some embodiments, the bypass module 140 may include a switch and/or a wire. In some embodiments, referring to FIG. 2 to FIG. 17, the bypass module 140 may include two switches, or one switch, or one switch and one wire, or one wire, and the like. Any arrangement that can achieve the electrical connection and disconnection between the electric device 120 and the charging device 150 using switches and/or wires is possible, with no limitations imposed here.

This allows for flexible configuration of the bypass module 140.

According to some embodiments of the present application, the bypass module 140 may include: a first switch, connected between the positive electrode terminal and a positive line of the electric device 120; and a second switch, connected between the negative electrode terminal and a negative line of the electric device 120.

In some embodiments, referring to FIG. 2 and FIG. 3, the first switch may be a switch K12 connected between a positive electrode terminal of the charging interface 130 and the positive line of the electric device 120, and the second switch may be a switch K13 connected between a negative electrode terminal of the charging interface 130 and the negative line of the electric device 120.

The configuration of the first switch K12 and the second switch K13 can control an electrical connection/disconnection between the electric device 120 and the charging device 150, thereby making operation more flexible.

According to some embodiments of the present application, the bypass module 140 may include: a first switch, connected between the positive electrode terminal and the positive line of the electric device 120; and a second wire, connected between the negative electrode terminal and the negative line of the electric device 120.

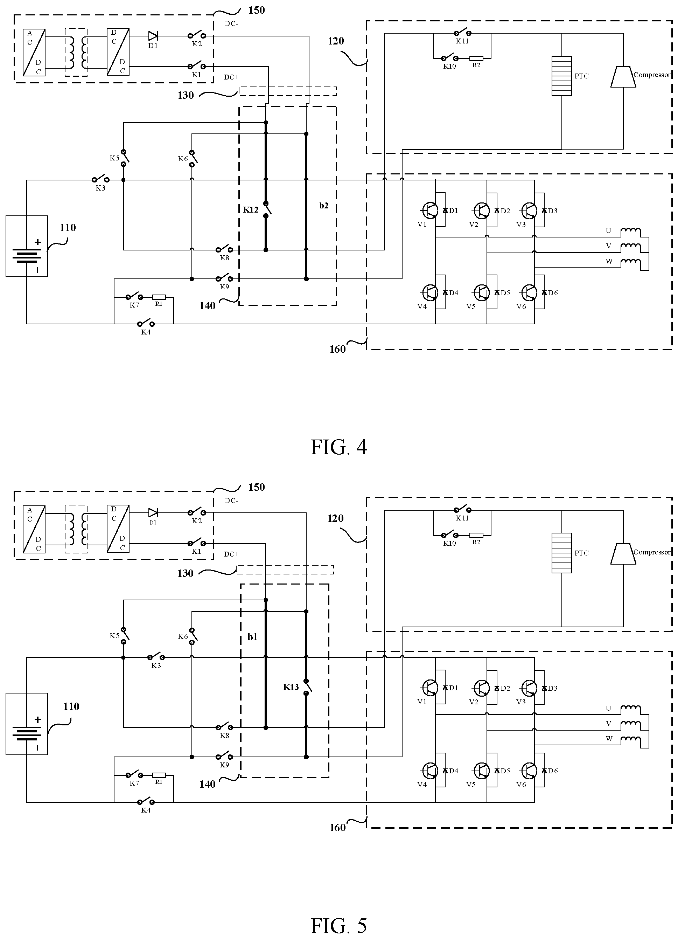

In some embodiments, referring to FIG. 4, the first switch may be a switch K12 connected between the positive electrode terminal of the charging interface 130 and the positive line of the electric device 120, and the second wire may be a wire b2 connected between the negative electrode terminal of the charging interface 130 and the negative line of the electric device 120. In this case, the bypass module 140 does not include the second switch K13 shown in FIG. 3.

The configuration of the first switch K12 and the second wire b2 can control the electrical connection/disconnection between the electric device 120 and the charging device 150, reducing the number of switching devices in the vehicle 100.

According to some embodiments of the present application, the bypass module 140 may include: a first wire, connected between the positive electrode terminal and the positive line of the electric device 120; and a second switch, connected between the negative electrode terminal and the negative line of the electric device 120.

In some embodiments, referring to FIG. 5, the first wire may be a wire b1 connected between a positive electrode terminal of the charging interface 130 and the positive line of the electric device 120, and the second switch may be a switch K13 connected between the negative electrode terminal of the charging interface 130 and the negative line of the electric device 120. In this case, the bypass module 140 does not include the first switch K12 shown in FIG. 3.

The configuration of the first wire b1 and the second switch K13 can control the electrical connection/disconnection between the electric device 120 and the charging device 150, reducing the number of switching devices in the vehicle 100.

According to some embodiments of the present application, the bypass module 140 may include: a first switch, connected between the positive electrode terminal and the positive line of the electric device 120.

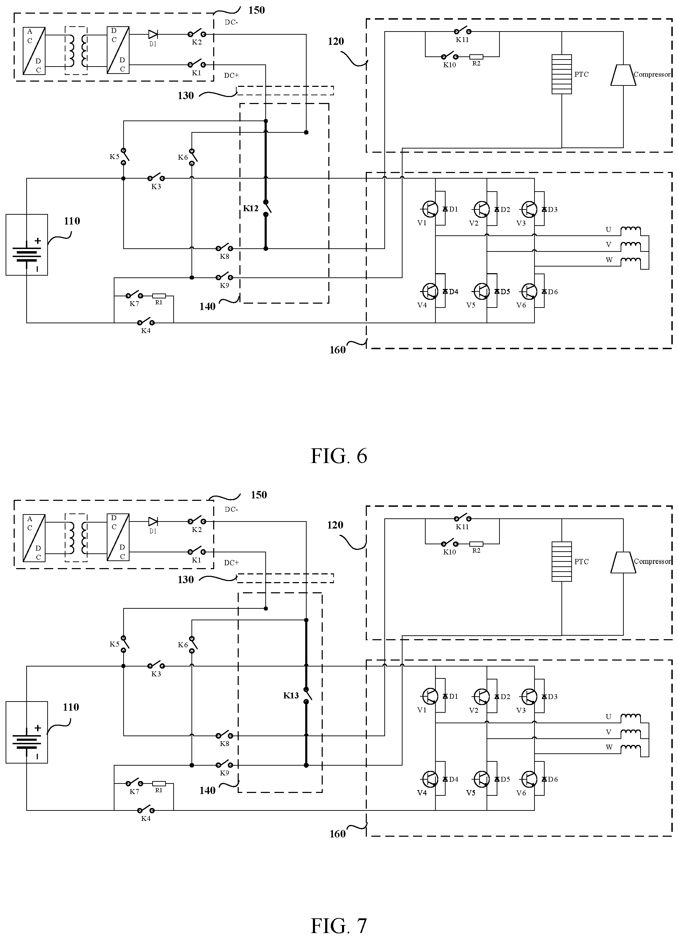

In some embodiments, referring to FIG. 6, the first switch may be a switch K12 connected between the positive electrode terminal of the charging interface 130 and the positive line of the electric device 120. In this case, the bypass module 140 does not include the second switch K13 shown in FIG. 3.

The configuration of the first switch K12 can control the electrical connection/disconnection between the electric device 120 and the charging device 150, reducing the number of electrical components in the vehicle 100.

According to some embodiments of the present application, the bypass module 140 may include: a second switch, connected between the negative electrode terminal and the negative line of the electric device 120.

In some embodiments, referring to FIG. 7, the second switch may be a switch K13 connected between the negative electrode terminal of the charging interface 130 and the negative line of the electric device 120. In this case, the bypass module 140 does not include the first switch K12 shown in FIG. 3.

The configuration of the second switch K13 can control the electrical connection/disconnection between the electric device 120 and the charging device 150, reducing the number of electrical components in the vehicle 100.

According to some embodiments of the present application, the bypass module 140 may include: a first wire, connected between the positive electrode terminal and the positive line of the electric device 120.

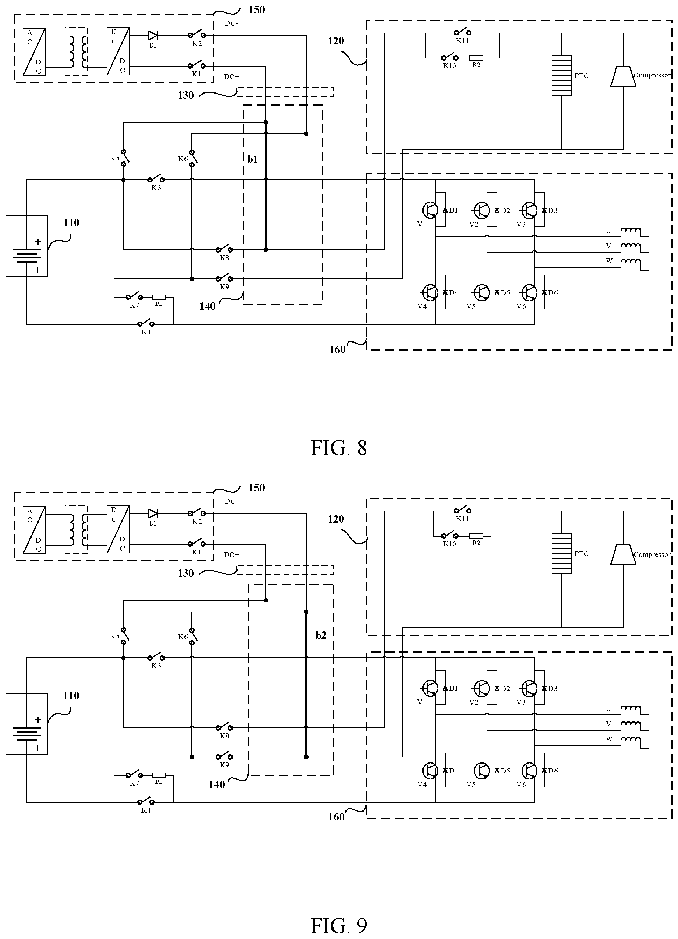

In some embodiments, referring to FIG. 8, the first wire may be a wire b1 connected between the positive electrode terminal of the charging interface 130 and the positive line of the electric device 120. In this case, the bypass module 140 does not include the first switch K12 and the second switch K13 shown in FIG. 3.

The configuration of the first wire b1 can control the electrical connection/disconnection between the electric device 120 and the charging device 130, reducing the number of switching devices in the vehicle 100.

According to some embodiments of the present application, the bypass module 140 may include: a second wire, connected between the negative electrode terminal and the negative line of the electric device 120.

In some embodiments, referring to FIG. 9, the second wire may be a wire b2 connected between the negative electrode terminal of the charging interface 130 and the electric device 120. In this case, the bypass module 140 does not include the first switch K12 and the second switch K13 shown in FIG. 3.

The configuration of the second wire b2 can control the electrical connection/disconnection between the electric device 120 and the charging device 150, reducing the number of switching devices in the vehicle 100.

According to some embodiments of the present application, the vehicle 100 may further include: a third switch, connected between a positive electrode of the traction battery 110 and the positive line of the electric device 120; and a fourth switch, connected between a negative electrode of the traction battery 110 and the negative line of the electric device 120.

In some embodiments, referring to FIG. 2 to FIG. 17, the third switch may be a switch K8 connected between the positive electrode of the traction battery 110 and the positive line of the electric device 120, and the fourth switch may be a switch K9 connected between the negative electrode of the traction battery 110 and the negative line of the electric device 120.

The configuration of the third switch K8 and the fourth switch K9 can control the connection/disconnection between the traction battery 110 and the electric device 120.

According to some embodiments of the present application, the vehicle 100 further includes: an electric energy module 160, configured to apply a current to the traction battery 110 to heat the traction battery 110; a fifth switch, connected between the positive electrode of the traction battery 110 and a positive line of the electric energy module 160; and a sixth switch, connected between the negative electrode of the traction battery 110 and a negative line of the electric energy module 160.

In this specification, the term "electric energy module" refers to a module capable of applying a current to two ends of a battery, where applying a current to the battery may involve applying a positive current and/or a negative current. In one example, the current may be in the form of a pulsed current.

When the temperature is low, the traction battery 110 cannot be charged due to its excessively low temperature. In this case, the electric energy module 160 can be used to heat the traction battery 110. After an electrical connection between the traction battery 110 and the charging device 150 is disconnected, the electric energy module 160 can apply a current to the traction battery 110. Due to the internal resistance of the traction battery 110, heat is generated when the current flows through the traction battery 110, thereby heating the traction battery 110.

The fifth switch may be a switch K3 connected between the positive electrode of the traction battery 110 and the positive line of the electric energy module 160, and the sixth switch may be a switch K4 connected between the negative electrode of the traction battery 110 and the negative line of the electric energy module 160.

The electric energy module 160 can be used to apply a current to the traction battery 110, thereby addressing the issue that the traction battery cannot be charged due to excessively low temperature.

According to some embodiments of the present application, the vehicle 100 further includes: a seventh switch, connected between the positive electrode terminal and the positive electrode of the traction battery 110; and an eighth switch, connected between the negative electrode terminal and the negative electrode of the traction battery 110.

In some embodiments, referring to FIG. 2, FIG. 3, and FIG. 5 to FIG. 9, the seventh switch may be a switch K5 connected between the positive electrode terminal of the charging interface 130 and the positive electrode of the traction battery 110, and the eighth switch may be a switch K6 connected between the negative electrode terminal of the charging interface 130 and the negative electrode of the traction battery 110.

In some embodiments, when the temperature is low, the traction battery 110 cannot be charged due to its excessively low temperature. In this case, the electric energy module 160 can be used to heat the traction battery 110.

In some embodiments, as shown in FIG. 2 and FIG. 3, after the vehicle 100 is connected to the charging device 150 through the charging interface 130, the charging device 150 and the vehicle 100 each confirm the self-heating charging phase. Upon successful confirmation, the charging device 150 initiates the self-heating charging process.

The vehicle 100 turns off the seventh switch K5 and/or the eighth switch K6 to disconnect the electrical connection between the traction battery 110 and the charging device 150, and turns off the third switch K8 and/or the fourth switch K9 to disconnect an electrical connection between the traction battery 110 and the electric device 120. Then, the first switch K12 and the second switch K13 in the bypass module 140 are turned on, so that the electric device 120 is electrically connected to the charging device 150. At this point, the load of the charging device 150 is the electric device 120.

After turning on the first switch K12 and the second switch K13, the fifth switch K3 and the sixth switch K4 are turned on to connect the electric energy module 160 to the traction battery 100 and heat the traction battery 110. At this time, the traction battery 110 is not connected to the charging device 150 but is connected to the electric energy module 160. By applying a current to two sides of the traction battery 110 through the electric energy module 160, the internal resistance of the battery rapidly heats the battery.

After completing the above self-heating charging process (for example, when the charging device 150 is in a heating-ready state), the fifth switch K3, the sixth switch K4, the first switch K12, and the second switch K13 are turned off, and the seventh switch K5 and the eighth switch K6 are turned on, so that the traction battery 110 is electrically connected to the charging device 150, and the charging device 150 transfers energy to the traction battery 110.

The methods for connecting the bypass module 140 to the electric device 120 include, but are not limited to, the examples shown below. Persons skilled in the art should understand that the scope of the present disclosure is not limited by these embodiments or examples. Furthermore, various elements in the embodiments or examples may be combined in various ways. Importantly, as technology evolves, many elements described herein may be replaced by equivalent elements that emerge after this disclosure. Additionally, for brevity, identical or similar parts/processes will not be repeated.

In some embodiments, as shown in FIG. 4, the bypass module 140 may further include a first wire b1 and a second switch K13. In this case, the second switch K13 is turned on, so that the electric device 120 is electrically connected to the charging device 150.

In some embodiments, as shown in FIG. 5, the bypass module 140 may further include a first switch K12. In this case, the first switch K12, the eighth switch K6, and the fourth switch K9 are turned on, so that the electric device 120 is electrically connected to the charging device 150.

In some embodiments, as shown in FIG. 6, the bypass module 140 may further include a second switch K13. In this case, the second switch K13, the seventh switch K5, and the third switch K8 are turned on, so that the electric device 120 is electrically connected to the charging device 150.

In some embodiments, as shown in FIG. 7, the bypass module 140 may further include a first wire b1. In this case, the eighth switch K6 and the fourth switch K9 are turned on, so that the electric device 120 is electrically connected to the charging device 150.

In some embodiments, as shown in FIG. 8, the bypass module 140 may further include a second wire b2. In this case, the seventh switch K5 and the third switch K8 are turned on, so that the electric device 120 is electrically connected to the charging device 150.

The configuration of the seventh switch K5 and the eighth switch K6 can control an electrical connection/disconnection between the traction battery 110 and the charging device 150, improving safety during vehicle 100 charging and making operation more convenient.

Additionally, during the heating process of the traction battery 110, disconnecting the electrical connection between the traction battery 110 and the charging device 150 and restoring the electrical connection between the traction battery 110 and the charging device 150 after heating is completed enable charging of the traction battery 110 after heating of the traction battery 110 is completed without disconnecting a physical connection between the charging device 150 and the charging interface 130 of the vehicle 100, thereby significantly reducing the complexity of the entire charging process.

According to some embodiments of the present application, the vehicle 100 further includes: an electric energy module 160, configured to apply a current to the traction battery 110 to heat the traction battery 110; a fifth switch, connected between the positive electrode of the traction battery 110 and the positive line of the electric energy module 160, and connected in series with the third switch between the positive electrode of the traction battery 110 and the positive line of the electric device 120; and a sixth switch, connected between the negative electrode of the traction battery 110 and the negative line of the electric energy module 160, and connected in series with the fourth switch K9 between the negative electrode of the traction battery 110 and the negative line of the electric device 120.

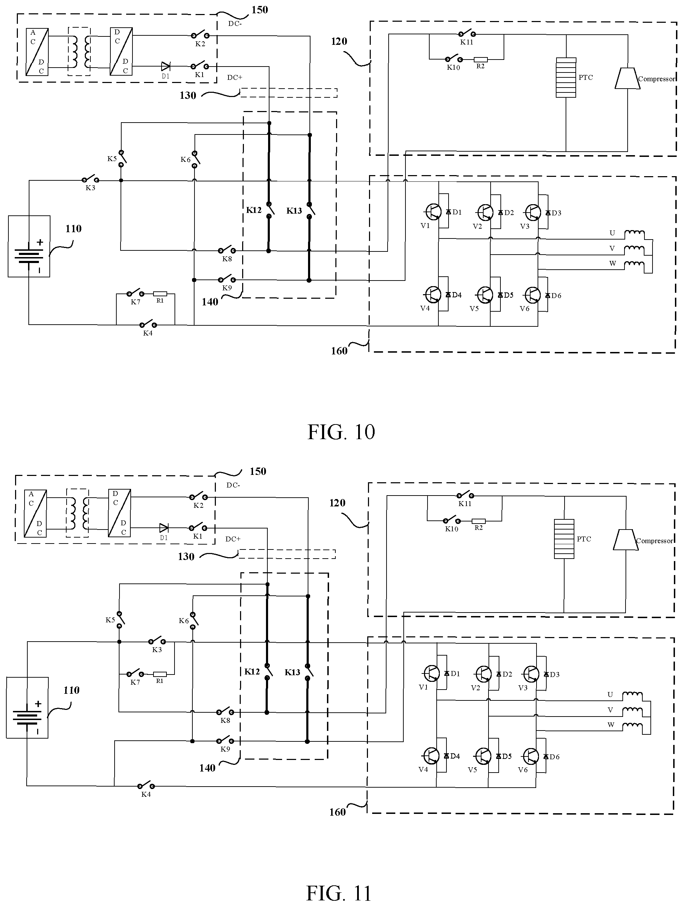

In some embodiments, referring to FIG. 10, the fifth switch is a switch K3 connected between the positive electrode of the traction battery 110 and the positive line of the electric energy module 160, and connected in series with the third switch K8 between the positive electrode of the traction battery 110 and the positive line of the electric device 120; and the sixth switch is a switch K4 connected between the negative electrode of the traction battery 110 and the negative line of the electric energy module 160, and connected in series with the fourth switch K9 between the negative electrode of the traction battery 110 and the negative line of the electric device 120.

The electric energy module 160 can be used to apply a current to the traction battery, thereby addressing the issue that the traction battery cannot be charged due to excessively low temperature.

According to some embodiments of the present application, the vehicle 100 further includes: a seventh switch, connected in series with the fifth switch K3 between the positive electrode terminal and the positive electrode of the traction battery 110; and an eighth switch, connected in series with the sixth switch K4 between the negative electrode terminal and the negative electrode of the traction battery 110.

In some embodiments, referring to FIG. 10, the seventh switch may be a switch K5 connected in series with the fifth switch K3 between the positive electrode terminal and the positive electrode of the traction battery 110; and the eighth switch may be a switch K6 connected in series with the sixth switch K4 between the negative electrode terminal and the negative electrode of the traction battery 100.

For the fifth switch K3 and the sixth switch K4, FIG. 10 and FIG. 4 show exemplary embodiments with different connection methods compared to FIG. 3.

In the embodiment shown in FIG. 10, the fifth switch K3 is connected between the positive electrode of the traction battery 110 and the positive line of the electric energy module 160, and is also connected in series with the third switch K8 between the positive electrode of the traction battery 110 and the positive line of the electric device 120; the sixth switch K4 is connected between the negative electrode of the traction battery 110 and the negative line of the electric energy module 160, and is also connected in series with the fourth switch K9 between the negative electrode of the traction battery 110 and the negative line of the electric device 120.

In the embodiment shown in FIG. 4, the fifth switch K3 is connected between the positive electrode of the traction battery 110 and the positive line of the electric energy module 160, and is connected in series with the third switch K8 between the positive electrode of the traction battery 110 and the positive line of the electric device 120; the sixth switch K4 is connected between the negative electrode of the traction battery 110 and the negative line of the electric energy module 160.

It should be understood that it is also possible for the fifth switch K3 to be connected between the positive electrode of the traction battery 110 and the positive line of the electric energy module 160; and for the sixth switch K4 to be connected between the negative electrode of the traction battery 110 and the negative line of the electric energy module 160, and also connected in series with the fourth switch K9 between the negative electrode of the traction battery 110 and the negative line of the electric device 120.

The configuration of the seventh switch K5 and the eighth switch K6 can control the electrical connection/disconnection between the traction battery 110 and the charging device 150, improving safety during vehicle 110 charging and making operation more convenient.

Additionally, during the heating process of the traction battery 110, disconnecting the electrical connection between the traction battery 110 and the charging device 150 and restoring the electrical connection between the traction battery 110 and the charging device 150 after heating is completed enable charging of the traction battery 110 after heating of the traction battery 110 is completed without disconnecting the physical connection between the charging device 150 and the charging interface 130 of the vehicle 100, thereby significantly reducing the complexity of the entire charging process.

According to some embodiments of the present application, the vehicle 100 further includes: a first precharge branch, connected in parallel with either the fifth switch K3 or the sixth switch K4.

After the electric energy module 160 stops applying a current to the traction battery 110 to stop heating the traction battery 100, a precharge phase is entered.

In some embodiments, referring to FIG. 10 to FIG. 16, the first precharge branch may be connected in parallel with the fifth switch K3. In some embodiments, referring to FIG. 3 to FIG. 10, the first precharge branch may be connected in parallel with the sixth switch K4.

It should be understood that, although the drawings of the present disclosure only show the first precharge branch connected in parallel with the fifth switch K3 or the sixth switch K4, in some embodiments, a parallel precharge branch may be provided for each of the fifth switch K3 and the sixth switch K4, and the present disclosure is not limited in this regard.

The configuration of the first precharge branch can reduce the impact of current on the traction battery 110, effectively prolonging the life of the traction battery 110.

According to some embodiments of the present application, the first precharge branch includes a first precharge resistor and a ninth switch connected in series.

In some embodiments, referring to FIG. 3 to FIG. 17, the first precharge resistor may be a resistor R1, and the ninth switch may be a switch K7 connected in series with the resistor R1.

The configuration of the first precharge branch can reduce the impact of current on the traction battery 110, effectively prolonging the life of the traction battery 110.

According to some embodiments of the present application, the vehicle 100 further includes: a tenth switch, connected to the electric device 120; and a second precharge branch, connected in parallel with the tenth switch.

In some embodiments, referring to FIG. 3 to FIG. 17, the tenth switch may be a switch K11 connected to the positive line or the negative line of the electric device 120. Two ends of the tenth switch K11 are also connected in parallel with a second precharge branch.

The configuration of the second precharge branch can reduce the impact of current on the electric device 120, effectively prolonging the life of the electric device 120.

According to some embodiments of the present application, the second precharge branch includes a second precharge resistor and an eleventh switch connected in series.

In some embodiments, referring to FIG. 3 to FIG. 17, the second precharge resistor may be a resistor R2, and the eleventh switch may be a switch K10 connected in series with the resistor R2.

The configuration of the second precharge branch can reduce the impact of current on the electric device 120, effectively prolonging the life of the electric device 120.

According to some embodiments of the present application, the electric device 120 includes at least one of the following: an air conditioning compressor, a power converter, a heat pump, and a positive temperature coefficient thermistor.

The electric device 120 includes various forms of devices, such as an air conditioning compressor, a power converter, a heat pump, and a positive temperature coefficient thermistor, which is not limited herein. It should be understood that, although the electric device 120 shown in FIG. 3 to FIG. 17 is a compressor and a positive temperature coefficient thermistor (PTC), this is not intended to be limiting, and other electric devices are also possible.

The charging device 150 can supply power to the electric devices 120 in the vehicle 100 that require power. In some cases (for example, when the electric device 120 is a heat pump or a positive temperature coefficient thermistor), the electric device 120 can also assist in heating the traction battery 110, thereby shortening heating time.

According to some embodiments of the present application, the vehicle 100 further includes: a twelfth switch, connected between the positive electrode of the traction battery 110 and the positive line of the electric device 120; and a thirteenth switch, connected between the negative electrode of the traction battery 110 and the negative line of the electric device 120.

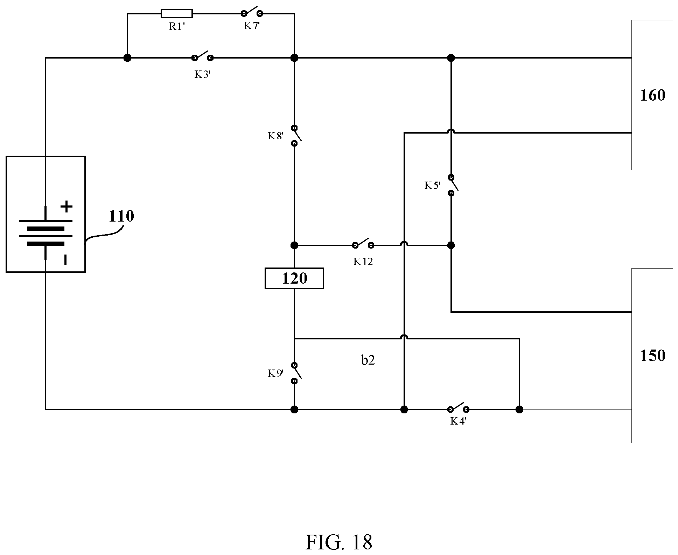

In some embodiments, referring to FIG. 18, FIG. 19, and FIG. 21, when a first switch K12 is connected between the positive electrode terminal of the charging interface 130 and the positive line of the electric device 120, the vehicle 100 may further include a twelfth switch K8' connected between the positive electrode of the traction battery 110 and the positive line of the electric device 120, and a thirteenth switch K9' connected between the negative electrode of the traction battery 110 and the negative line of the electric device 120.

The configuration of the twelfth switch K8' and the thirteenth switch K9' can control the connection/disconnection between the traction battery 110 and the electric device 120.

According to some embodiments of the present application, the vehicle further includes: an electric energy module 160, configured to apply a current to the traction battery 110 to heat the traction battery 110; a fourteenth switch, connected between the positive electrode of the traction battery 110 and the positive line of the electric energy module 160, and connected in series with the twelfth switch between the positive electrode of the traction battery 110 and the positive line of the electric device 120; and a fifteenth switch, connected between the negative electrode terminal and the negative electrode of the traction battery 110, and connected between the negative electrode terminal and the negative line of the electric energy module 160.

In some embodiments, still referring to FIG. 18, FIG. 19, and FIG. 21, when a first switch K12 is connected between the positive electrode terminal of the charging interface 130 and the positive line of the electric device 120, the vehicle 100 may further include a fourteenth switch K3' connected between the positive electrode of the traction battery 110 and the positive line of the electric energy module 160, and connected in series with the twelfth switch K8' between the positive electrode of the traction battery 110 and the positive line of the electric device 120; and a fifteenth switch K4' connected between the negative electrode terminal of the charging interface 130 and the negative electrode of the traction battery 110, and connected between the negative electrode terminal of the charging interface 130 and the negative line of the electric energy module 160.

The electric energy module 160 can be used to apply a current to the traction battery 110, thereby addressing the issue that the traction battery 110 cannot be charged due to excessively low temperature.

According to some embodiments of the present application, the vehicle 100 further includes: a sixteenth switch or a third wire, connected between the positive electrode terminal and the positive line of the electric energy module 160, and connected in series with the first switch between the positive line of the electric device 120 and the positive line of the electric energy module 160.

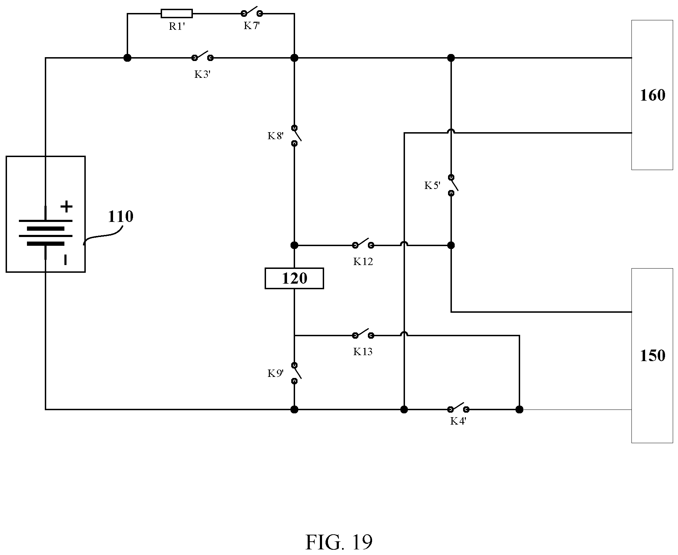

In some embodiments, referring to FIG. 18 and FIG. 19, the vehicle 100 further includes a sixteenth switch K5' connected between the positive electrode terminal of the charging interface 130 and the positive line of the electric energy module 160, and connected in series with the first switch K12 between the positive line of the electric device 120 and the positive line of the electric energy module 160.

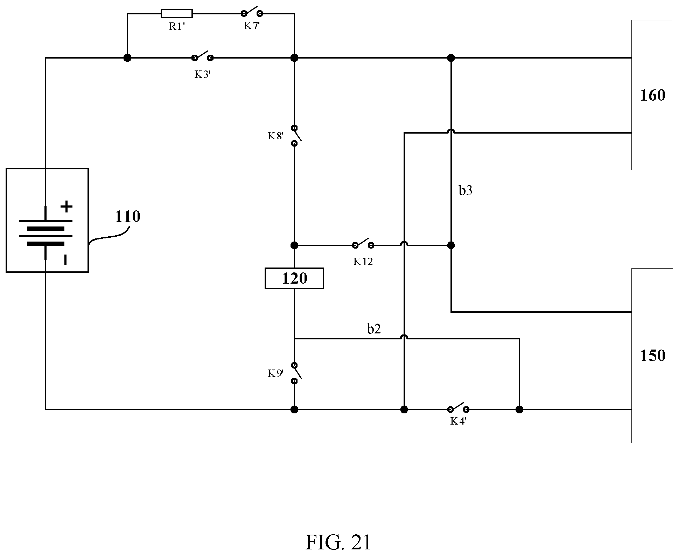

In some embodiments, referring to FIG. 21, the vehicle 100 may further include a third wire b3 connected between the positive electrode terminal of the charging interface 130 and the positive line of the electric energy module 160, and connected in series with the first switch K12 between the positive line of the electric device 120 and the positive line of the electric energy module 160.

In the embodiment shown in FIG. 21, the first switch K12 can be turned on to electrically connect the electric device 120 to the charging device 150. Next, the fourteenth switch K3' is turned on to connect the electric energy module 160 to the traction battery 100 and heat the traction battery 110. After completing the self-heating charging process, the thirteenth switch K9' is turned on, and the first switch K12 is turned off, so that the traction battery 110 is electrically connected to the charging device 150, and the charging device 150 transfers energy to the traction battery 110.

Similar to the embodiment shown in FIG. 21, in the embodiments shown in FIG. 18 and FIG. 19, the connection method shown in FIG. 21 can be further achieved by turning on the second switch K13 and/or turning on the sixteenth switch K5'.

This can reduce the number of electrical components in the bypass module 160.

According to some embodiments of the present application, the vehicle 100 further includes: a twelfth switch, connected between the positive electrode of the traction battery 110 and the positive line of the electric device 120; and a thirteenth switch, connected between the negative electrode of the traction battery 110 and the negative line of the electric device 120.

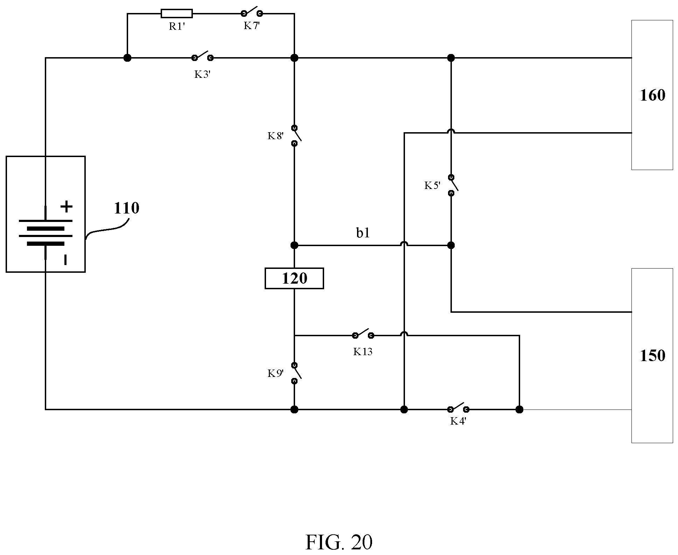

In some embodiments, referring to FIG. 20, when a first wire b1 is connected between the positive electrode terminal of the charging interface 130 and the positive line of the electric device 120, and a second switch K13 is connected between the negative electrode terminal of the charging interface 130 and the negative line of the electric device 120, the vehicle 100 may further include: a twelfth switch K8' connected between the positive electrode of the traction battery 110 and the positive line of the electric device 120; and a thirteenth switch K9' connected between the negative electrode of the traction battery 110 and the negative line of the electric device 120.

The configuration of the twelfth switch K8' and the thirteenth switch K9' can control the connection/disconnection between the traction battery 110 and the electric device 120.

According to some embodiments of the present application, the vehicle 100 further includes: an electric energy module 160, configured to apply a current to the traction battery 110 to heat the traction battery 110; a fourteenth switch, connected between the positive electrode of the traction battery 110 and the positive line of the electric energy module 160, and connected in series with the twelfth switch between the positive electrode of the traction battery 110 and the positive line of the electric device 120; and a fifteenth switch, connected between the negative electrode terminal and the negative electrode of the traction battery 110, and connected between the negative electrode terminal and the negative line of the electric energy module 160.

In some embodiments, still referring to FIG. 20, when a first wire b1 is connected between the positive electrode terminal of the charging interface 130 and the positive line of the electric device 120, and a second switch K13 is connected between the negative electrode terminal of the charging interface 130 and the negative line of the electric device 120, the vehicle 100 may further include: a fourteenth switch K3' connected between the positive electrode of the traction battery 110 and the positive line of the electric energy module 160, and connected in series with the twelfth switch K8' between the positive electrode of the traction battery 110 and the positive line of the electric device 120; and a fifteenth switch K4' connected between the negative electrode terminal of the charging interface 130 and the negative electrode of the traction battery 110, and connected between the negative electrode terminal of the charging interface 130 and the negative line of the electric energy module 160.

The electric energy module 160 can be used to apply a current to the traction battery 110, thereby addressing the issue that the traction battery 110 cannot be charged due to excessively low temperature.

According to some embodiments of the present application, the vehicle 100 further includes: a sixteenth switch, connected between the positive electrode terminal and the positive line of the electric energy module 160, and connected in series with the second wire between the positive line of the electric device 120 and the positive line of the electric energy module 160.

In some embodiments, referring to FIG. 20, the vehicle 100 may further include a sixteenth switch K5' connected between the positive electrode terminal of the charging interface 130 and the positive line of the electric energy module 160, and connected in series with the second wire b2 between the positive line of the electric device 120 and the positive line of the electric energy module 160.

In the embodiment shown in FIG. 20, the second switch K13 can be turned on to electrically connect the electric device 120 to the charging device 150. Next, the fourteenth switch K3' is turned on to connect the electric energy module 160 to the traction battery 100 and heat the traction battery 110. After completing the self-heating charging process, the second switch K13 is turned off, and the twelfth switch K8' and the fifteenth switch K4' are turned on, so that the traction battery 110 is electrically connected to the charging device 150, and the charging device 150 transfers energy to the traction battery 110.

This can reduce the number of electrical components in the bypass module 140.

According to some embodiments of the present application, the vehicle 100 further includes: a third precharge branch, connected in parallel with either the fourteenth switch K3' or the fifteenth switch K4'.

After the electric energy module 160 stops applying a current to the traction battery 110 to stop heating the traction battery 100, a precharge phase is entered.

In some embodiments, referring to FIG. 18 to FIG. 21, the third precharge branch may be connected in parallel with the fourteenth switch K3'.

It should be understood that, although the drawings of the present disclosure only show the third precharge branch connected in parallel with the fourteenth switch K3', in some embodiments, a parallel precharge branch may be provided for each of the fourteenth switch K3' and the fifteenth switch K4', and the present disclosure is not limited in this regard.

The configuration of the third precharge branch can reduce the impact of current on the traction battery 110, effectively prolonging the life of the traction battery 110.

According to some embodiments of the present application, the third precharge branch includes a third precharge resistor and a seventeenth switch connected in series.

In some embodiments, referring to FIG. 18 to FIG. 21, the third precharge resistor may be a resistor R1', and the seventeenth switch may be a switch K7' connected in series with the resistor R1'.

The configuration of the third precharge branch can effectively prolong the life of the traction battery 110.

According to some embodiments of the present application, the electric device 120 includes a heating film.

In some embodiments, the heating film may be attached (for example, fully or partially wrapped) to a battery cell, a battery module, or a battery pack.

In some cases (for example, when the electric device 120 is a heating film), the electric device 120 can also assist in heating the traction battery, thereby shortening heating time.

According to some embodiments of the present application, the electric energy module 160 includes at least one of an energy storage module or a motor control module.

The electric energy module 160 may be an independent energy storage module or a motor control module of the vehicle 100. Furthermore, the motor control module may include a single electric drive generating current or a dual electric drive generating current. Additionally, other modules generating current may be used to heat the traction battery 110, which is not limited herein.

The electric energy module 160 can be selected based on needs, improving adaptability to different usage scenarios for different vehicles.

Referring to FIG. 2 and FIG. 3, in some embodiments, when the temperature is low, the traction battery 110 cannot be charged due to its excessively low temperature. In this case, the electric energy module 160 can be used to heat the traction battery 110.

In some embodiments, after the vehicle 100 is connected to the charging device 150 through the charging interface 130, the charging device 150 and the vehicle 100 each confirm the self-heating charging phase. Upon successful confirmation, the charging device 150 initiates the self-heating charging process.

The vehicle 100 turns off the seventh switch K5 and/or the eighth switch K6 to disconnect the electrical connection between the traction battery 110 and the charging device 150, and turns off the third switch K8 and/or the fourth switch K9 to disconnect the electrical connection between the traction battery 110 and the electric device 120. Then, the first switch K12 and the second switch K13 in the bypass module 140 are turned on, so that the electric device 120 is electrically connected to the charging device 150. At this point, the load of the charging device 150 is the electric device 120.

After turning on the first switch K12 and the second switch K13, the fifth switch K3 and the sixth switch K4 are turned on to connect the electric energy module 160 to the traction battery 100 and heat the traction battery 110. At this time, the traction battery 110 is not connected to the charging device 150 but is connected to the electric energy module 160. By applying a current to two sides of the traction battery 110 through the electric energy module 160, the internal resistance of the battery rapidly heats the battery.

After completing the above self-heating charging process (for example, when the charging device 150 is in a heating-ready state), the fifth switch K3, the sixth switch K4, the first switch K12, and the second switch K13 are turned off, and the seventh switch K5 and the eighth switch K6 are turned on, so that the traction battery 110 is electrically connected to the charging device 150, and the charging device 150 transfers energy to the traction battery 110.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A vehicle (100), comprising:
a traction battery (110);
an electric device (120);
a charging interface (130), configured to connect to a charging device (150) to enable the vehicle (100) to be powered by the charging device (150), wherein the charging interface (130) comprises a positive electrode terminal and a negative electrode terminal; and
a bypass module (140), configured to connect or disconnect the charging device (150) from the electric device (120).

2. The vehicle (100) according to claim 1, wherein the bypass module (140) comprises at least one of a switch or a wire.

3. The vehicle (100) according to claim 1 or 2, wherein the bypass module (140) comprises:
a first switch (K12), connected between the positive electrode terminal and a positive line of the electric device (120); and
a second switch (K13), connected between the negative electrode terminal and a negative line of the electric device (120).

4. The vehicle (100) according to claim 1 or 2, wherein the bypass module (140) comprises:
a first switch (K12), connected between the positive electrode terminal and a positive line of the electric device (120); and
a second wire (b2), connected between the negative electrode terminal and a negative line of the electric device (120).

5. The vehicle (100) according to claim 1 or 2, wherein the bypass module (140) comprises:
a first wire (b1), connected between the positive electrode terminal and a positive line of the electric device (120); and
a second switch (K13), connected between the negative electrode terminal and a negative line of the electric device (120).

6. The vehicle (100) according to claim 1 or 2, wherein the bypass module (140) comprises:
a first switch (K12), connected between the positive electrode terminal and a positive line of the electric device (120).

7. The vehicle (100) according to claim 1 or 2, wherein the bypass module (140) comprises:
a second switch (K13), connected between the negative electrode terminal and a negative line of the electric device (120).

8. The vehicle (100) according to claim 1 or 2, wherein the bypass module (140) comprises:
a first wire (b1), connected between the positive electrode terminal and a positive line of the electric device (120).

9. The vehicle (100) according to claim 1 or 2, wherein the bypass module (140) comprises:
a second wire (b2), connected between the negative electrode terminal and a negative line of the electric device (120).

10. The vehicle (100) according to any one of claims 1 to 9, wherein the vehicle (100) further comprises:
a third switch (K8), connected between a positive electrode of the traction battery (110) and the positive line of the electric device (120); and
a fourth switch (K9), connected between a negative electrode of the traction battery (110) and the negative line of the electric device (120).

11. The vehicle (100) according to any one of claims 1 to 10, wherein the vehicle (100) further comprises:
an electric energy module (160), configured to apply a current to the traction battery (110) to heat the traction battery (110);
a fifth switch (K3), connected between the positive electrode of the traction battery (110) and a positive line of the electric energy module (160); and
a sixth switch (K4), connected between the negative electrode of the traction battery (110) and a negative line of the electric energy module (160).

12. The vehicle (100) according to any one of claims 1 to 11, wherein the vehicle (100) further comprises:
a seventh switch (K5), connected between the positive electrode terminal and the positive electrode of the traction battery (110); and
an eighth switch (K6) connected between the negative electrode terminal and the negative electrode of the traction battery (110).

13. The vehicle (100) according to claim 10, wherein the vehicle (100) further comprises:
an electric energy module (160), configured to apply a current to the traction battery (110) to heat the traction battery (110);
a fifth switch (K3), connected between the positive electrode of the traction battery (110) and the positive line of the electric energy module (160), and connected in series with the third switch (K8) between the positive electrode of the traction battery (110) and the positive line of the electric device (120); and
a sixth switch (K4), connected between the negative electrode of the traction battery (110) and the negative line of the electric energy module (160), and connected in series with the fourth switch (K9) between the negative electrode of the traction battery (110) and the negative line of the electric device (120).

14. The vehicle (100) according to claim 13, wherein the vehicle (100) further comprises:
a seventh switch (K5), connected in series with the fifth switch (K3) between the positive electrode terminal and the positive electrode of the traction battery (110); and
an eighth switch (K6), connected in series with the sixth switch (K4) between the negative electrode terminal and the negative electrode of the traction battery (110).

15. The vehicle (100) according to any one of claims 11 to 14, wherein the vehicle (100) further comprises:
a first precharge branch, connected in parallel with either the fifth switch (K3) or the sixth switch (K4).

16. The vehicle (100) according to claim 15, wherein the first precharge branch comprises a first precharge resistor and a ninth switch (K7) connected in series.

17. The vehicle (100) according to any one of claims 1 to 16, wherein the vehicle (100) further comprises:
a tenth switch (K11), connected to the electric device (120); and
a second precharge branch, connected in parallel with the tenth switch (K11).

18. The vehicle (100) according to claim 17, wherein the second precharge branch comprises a second precharge resistor and an eleventh switch (K10) connected in series.

19. The vehicle (100) according to any one of claims 1 to 18, wherein the electric device (120) comprises at least one of the following: an air conditioning compressor, a power converter, a heat pump, and a positive temperature coefficient thermistor.

20. The vehicle (100) according to claim 3 or 4, wherein the vehicle (100) further comprises:
a twelfth switch (K8'), connected between a positive electrode of the traction battery (110) and a positive line of the electric device (120); and
a thirteenth switch (K9'), connected between a negative electrode of the traction battery (110) and a negative line of the electric device (120).

21. The vehicle (100) according to claim 20, wherein the vehicle (100) further comprises:
an electric energy module (160), configured to apply a current to the traction battery (110) to heat the traction battery (110);
a fourteenth switch (K3'), connected between the positive electrode of the traction battery (110) and the positive line of the electric energy module (160), and connected in series with the twelfth switch (K8') between the positive electrode of the traction battery (110) and the positive line of the electric device (120); and
a fifteenth switch (K4'), connected between the negative electrode terminal and the negative electrode of the traction battery (110), and connected between the negative electrode terminal and the negative line of the electric energy module (160).

22. The vehicle (100) according to claim 21, wherein the vehicle (100) further comprises:
a sixteenth switch (K5') or a third wire (b3), connected between the positive electrode terminal and the positive line of the electric energy module (160), and connected in series with the first switch (K12) between the positive line of the electric device (120) and the positive line of the electric energy module (160).

23. The vehicle (100) according to claim 5, wherein the vehicle (100) further comprises:
a twelfth switch (K8'), connected between a positive electrode of the traction battery (110) and the positive line of the electric device (120); and
a thirteenth switch (K9'), connected between a negative electrode of the traction battery (110) and the negative line of the electric device (120).

24. The vehicle (100) according to claim 23, wherein the vehicle (100) further comprises:
an electric energy module (160), configured to apply a current to the traction battery (110) to heat the traction battery (110);
a fourteenth switch (K3'), connected between the positive electrode of the traction battery (110) and a positive line of the electric energy module (160), and connected in series with the twelfth switch (K8') between the positive electrode of the traction battery (110) and the positive line of the electric device (120); and
a fifteenth switch (K4'), connected between the negative electrode terminal and the negative electrode of the traction battery (110), and connected between the negative electrode terminal and a negative line of the electric energy module (160).

25. The vehicle (100) according to claim 24, wherein the vehicle (100) further comprises:
a sixteenth switch (K5'), connected between the positive electrode terminal and a positive line of the electric energy module (160), and connected in series with the second wire (b2) between the positive line of the electric device (120) and the positive line of the electric energy module (160).

26. The vehicle (100) according to any one of claims 21 to 22 and 24 to 25, wherein the vehicle (100) further comprises:
a third precharge branch, connected in parallel with either the fourteenth switch (K3') or the fifteenth switch (K4').

27. The vehicle (100) according to claim 26, wherein the third precharge branch comprises a third precharge resistor and a seventeenth switch (K7') connected in series.

28. The vehicle (100) according to any one of claims 1 to 5 and 20 to 27, wherein the electric device (120) comprises a heating film.

29. The vehicle (100) according to any one of claims 11 to 16, 21 to 22, and 24 to 27, wherein the electric energy module (160) comprises at least one of an energy storage module or a motor control module.
